# EUROPEAN PATENT APPLICATION

(11) **EP 1 992 237 A2**
(43) Date of publication of application: **19.11.2008**
(21) Application number: 08156181.3
(22) Date of filing: 14.05.2008
(51) Int. Cl.: A23N 15/08, B65G 47/248, B65G 47/82

(54) **Apparatus for orienting non-round objects, in particular bulbs**

(30) Priority: 15.05.2007 DK 200700734
(71) Applicant: Egatec A/S, 5250 Odense SV (DK)
(72) Inventor: Pedersen, Jorge Odd, 5260, Odense S (DK)
(74) Representative: Tellefsen, Jens J.

(57) **Abstract**

Method for turning non-round objects and in particular bulbs, berries, fruits, vegetables such as onions, beets and the like, wherein the objects are guided into an apparatus comprising a turning apparatus (1), where the turning apparatus (1) comprises a canal (2) having an inverted V- or U-shape, such that the objects (3) are placed inside the canal, and that means (4,5) are arranged superposed and above the canal, for pushing the objects (3) along the canal towards a delivery end (6), where said delivery end comprises a plate (8), such that as the objects are pushed along the canal, the objects (3) non-round shape will interact with the inner sides of the canal (2) and the means for pushing the objects along the canal, whereby the objects will be uniformly orientated, and that as the objects are pushed onto the plate the objects will have a well defined and precise position.

## Description

The present invention relates to an apparatus suitable for orientating non-round objects, in particular fruits, vegetables, bulbs, onions and the like, as well as a method for the orientation of non-round objects.

In certain industries where the products are not symmetrical or may have a varying cross-section and/or shape, it is often necessary to orientate such objects in a certain manner in order for further processing of the products to be able to be carried out.

This is true for products such as bulbs hereunder light bulbs, flower bulbs and different kinds of vegetables such as onions, beets and the like. In the art, several devices have been suggested which especially in the field of turning onions, bulbs and the like are quite cumbersome and/or labour intensive.

SU 1792632 describes a device for orientating onions for trimming where the onions are placed individually in a casing. Thereafter, the casing comprising the onion is moved in relation to spring-activated cams which will engage the onion in order to turn the onion in the casing. The cams are applied to both the top and the bottom of the onion in order to finalize the position of the onion such that subsequent trimming or further processing of the onion may be performed.

Another prior art device also within the field of treating onions is known from IT 1242964 describing an onion-peeling machine. The onions arrive on a conveyor and are placed on trays which are placed on a conveyor. Before the onions placed on the trays enter the onion-peeling device, it is necessary to orientate the onions such that the peeling device will know exactly where to cut and peel the onion in order to minimize waste and in order to achieve the optimum cutting and thereby peeling of the onion. For this purpose, a person is placed along the conveyor in order to orientate the onions manually such that the top of the onion will be turned upwards.

From US 4184423, still another device is known. This device is developed in order to cut round objects into wedge shape sections. The device comprises a generally rotatable round table provided with a member of equally spaced apertures. In each aperture, is arranged a deformable object support adapted to receive the object to be sectioned. A plunger arranged above the table will push the object through the deformable object support and thereby centre the object in relation to a cutting arrangement installed below the aperture. In this manner, substantially identical sections of the object are cut.

The device according to US 4184423 therefore does only centre the object to be cut. This is enough for a lot of uses. For other applications, however, it is necessary not only to centre the object to be treated but also to orientate the object, such that the following treatment will be carried out in the proper manner. US 4184423 is silent about this aspect and generally in the art, orientation of objects, and in particular non-round objects, is carried out by manual labour, as illustrated in IT 1242964.

The prior art devices all comprises disadvantages which severely limits the amount of items such as bulbs, pears, onions or the like which may be orientated and thereby made ready for further processing. Furthermore, the manual turning of onions is quite labour intensive and therefore quite costly as well as tiresome for the personnel involved which in turn may lead to permanent work related injuries.

The applicant's prior invention published as EP 1 637 483 solved a number of the problems associated with the prior art devices, but although it efficiently turns the non-round objects into any desired position a few drawbacks were detected with the prior art device. One of these drawbacks was the fact that when the objects to be turned were onions the soil adhering to the outside of the onions would clog up the brushes and thereby diminish the efficiency of the brushes to rotate the onions during the transition through the brushes such that some of the onions would not be completely turned. The not complete turning or very exact positioning of the onions can in some instances lead to a waste during further processing in that non-round objects are not being positioned correctly in the following machinery such that an optimal further processing of the objects is not achieved.

It is, therefore, an object of the provide an apparatus as well as a method suitable for orienting non-round objects very precisely in order to prepare these for further processing.

The present invention addresses this by providing an apparatus suitable for orienting non-round objects and in particular bulbs, berries, fruits, vegetables such as onions, beets and the like, where said apparatus comprises:
- a turning arrangement where the turning arrangement comprises a canal having a substantial inverted U- or V-shaped configuration, having the open side facing generally upwards, where said canal has an object receiving end and an object delivery end, and that superposed above and along in the same longitudinal direction one or more moveable pins are arranged, where said pins projects downwardly towards the open side of the canal, such that objects loaded onto the canal, will be pushed along the canal by the pins to the delivery end, at which end a plate in the shape of a conical frustrum is arranged for receiving the object.

The friction against the side of the canal, created by the pins pushing at the objects through the canal, makes the objects turn such that depending on the type of object they will all be turned in generally the same orientation with respect to the canal. At the end of the canal the plate is arranged such that as an object is moved/pushed into the plate it will not be able to turn more whereby the turning procedure has been concluded by placing the object in a fixed position. As the turning mechanism is not dependent on moveable parts or the like apart from the pins, the number of objects not being turned correctly by using this turning apparatus is extremely low. Of course, there will be objects, e.g. vegetables onto which large lumps of clay and the like adhere which will not be turned correctly, but even for objects, again vegetables having a certain amount of soil/clay adhering to the outer surface, the turning apparatus will turn them into a substantially uniform orientation as objects not being covered or partly covered with soil or clay.

In some particular cases, especially when the objects are onions it is advantageous to arrange one or more obstructions which obstructions are arranged such that they may come into contact with the objects. The obstructions may advantageously be resilient.

When the objects are onions or similarly shaped objects, a few of the objects may arrive in the canal, such that their symmetry axis, i.e. an axis going through the root and stem, is horizontal and arranged perpendicular to the longitudinal direction of the canal. In this position, the pins will engage the objects, and due to the orientation of the objects, they will simply roll in the canal, without being turned. The obstructions, and preferably resilient obstructions, will engage the objects and bring them out of this special position relative to the canal and pins. The obstructions may be slightly bend steel rods, arranged substantially in the longitudinal direction of the canal, however at a slightly different angle such that the obstructions will have an oblique angle relative to the longitudinal axis of the canal.

In a further advantageous embodiment of the invention the pins are arranged such that they reciprocally moves back and forth along the canal where said pins are biased in the travelling direction and may pivot relative to the canal, such that the pins may fold and pass an object in the canal or at the delivery end, against the biasing force. As the pins may fold against the travelling direction the objects which have already been forwarded by the pin is left in place as the pin moves backwards, i.e. further up stream in order to push the next object down the canal. By arranging a plurality of pins having an overlapping relationship such that the movement of one pin moves the objects such that as the pins are withdrawn, the pin in front will be able to move behind the object just placed at the position of the following pin, it becomes possible to move the objects through the canal and at the same time turn them due to the frictional engagement with the side of the canal.

In an alternative embodiment, a plurality of pins are arranged on a chain which chain rotates around two end pulleys arranged adjacent and superposed above either end of the canal such that the pins are moved from the receiving end to the delivery end of the canal, where said pins are biased in the travelling direction and may pivot relative to the chain and canal, such that the pins may fold and pass an object in the canal or at the delivery end, against the biasing force.

By rotating the chain around the pulleys, there will always be a pin engaging the object such that the object is pushed and turned through the canal towards the receiving plate and may be picked up for further processing. Again the pins may be attached to the chain such that they may fold and pass an object e.g. when the object reaches the plate whereby the resistance against further movement is increased, the pin will collapse and move over the object and thereby provide accessibility for the following pin pushing and object to place the object in the plate. In instances where the objects are not moved from the plate, a queue of objects will be collecting in the canal, but due to the pivotal movements of the pins, the pins will just by pass the objects and at the same time push new objects through the canal and thereby turn them into the correct position and as the plate becomes available for another object, the pins will push the queue of objects sufficiently in order to place the foremost object in the plate from where it may be collected for further processing.

In order to remove the objects from the plate, the invention in a further advantageous embodiment provides gripping means which are arranged adjacent the delivery end of the canal where said gripping means has means for lifting an object from the plate onto further processing of the object. The gripping means may have any suitable configuration depending on the further processing and the objects being using, but suitable gripping means may comprise two parallel arranged arms which may pivot into an outer contact with the object and grip the object substantially at the sides of the object such that the uppermost and lowermost parts of the object, as they are placed in the plate, are not engaged by the gripping means.

In a still further advantageous embodiment of the invention, the plate is provided with a central aperture and that at least part of the outer edge of the plate is integral with the bottom of the canal. This embodiment is particularly interesting where the objects to be turned or onions in that the onions have a top part and a bottom part such that from the top part usually remains of leaves or stocks or stems which may be accommodated by providing an aperture in the plate such that the leaves, stems or stocks may project through the apertures whereby the roots of the onion will be facing upwards. This aperture in the case where the objects or onions or similar objects to be turned therefore concludes the turning procedure by fixating the onion in the plate in a position where the stems project through the aperture such that all onions will be turned in exactly the same position.

In a further advantageous embodiment, the canal is sloped at the interval -25° to +25° more preferred -10° to +10°, and that the means for creating the slope of the canal may be adjustable according to the type of object being turned.

The slope serves to increase the object's contact with the pins and at the same time also increase the friction against the side of the canal where the slope creates an uphill movement of the objects placed in the canal. By sloping downhill, the objects may roll in the canal and thereby turn themselves into the desired position such that the engagement of the pins with the objects may be minimizes. This may be interesting for objects being very fragile or very sensitive to engagement with the pins such that e.g. apples and the like are not provided with bruises due to the engagement with either the canal or the pins.

In a further advantageous embodiment, the apparatus comprises a plurality of parallel arranged turning arrangements.

It will normally be necessary to arrange a plurality of turning arrangements in order to make the apparatus efficient for industrial uses. For this purpose, it is foreseen that a relatively large number of turning arrangements may be arranged side by side and that the pins, in particular where they are arranged on a chain, may be driven by the same drive mechanism such that according to the invention one turning arrangement comprises also a chain with pins on, but the pulley wheels by be propelled by a single axel engaging a motor such that a substantially uniform movements in the canal may be achieved. Should there be variations in the sizes, weights or the like of the objects being moved in separate canals, the ability of the pins to pivot and by pass an object provides for the facility where the common drive does not create problems in one turning arrangement in that the pins may just simply by pass the objects which are causing these troubles and the turning arrangements arranged in parallel may continue until the turning arrangement which has be blocked has been repaired, cleaned, or whatever that was necessary to bring it back on line.

The present invention is also directed to a method for turning non-round objects and in particular bulbs, berries, fruits, vegetables such as onions, beets and the like, wherein the objects are guided into an apparatus comprising a turning apparatus, where the turning apparatus comprises a canal having an inverted V- or U-shape, such that the objects are placed inside the canal, and that means are arranged superposed and above the canal, for pushing the objects along the canal towards a delivery end, where said delivery end comprises a plate, such that as the objects are pushed along the canal, the objects non-round shape will interact with the inner sides of the canal and the means for pushing the objects along the canal, whereby the objects will be uniformly orientated, and that as the objects are pushed onto the plate the objects will have a well defined and precise position. The method takes advantage of the features which have already been described above. In a further particular embodiment of the invention, the objects are onions and the movement along the canal will cause the onions to have their top facing forwards and downwards in the direction of travel through the canal, and that the plate is provided with a central aperture, such that as the onion is placed in the plate, the top of the onion will project into the aperture, thereby fixing the position of the onion.

In particular, for onions having the special features described above with respect to the description of an onion, the present invention has shown that it is particularly reliable when turning onions even from a mix of onions having different sizes and different surface characteristics.

In a still further advantageous embodiment of the method, the objects are distributed to one or more turning apparatuses by means of a hopper, and that means for removing the turned objects placing the objects in preformed trays, for example arranged on a conveyor for moving the turned objects away from the turning apparatus. This method is implemented for industrial purposes where a large number of turning apparatuses are arranged in parallel such that large quantities of object, e.g. onions, may be turned in order to provide a rationalised and efficient handling of the onions prior to further processing.

The invention will now be described with respect to the drawing wherein
figure 1 illustrates a sideview of an embodiment;
figure 2 illustrates a perspective view of the embodiment in fig.1;
Figure 3 illustrates a close-up of an example of gripping means according to the invention.

### Detailed description

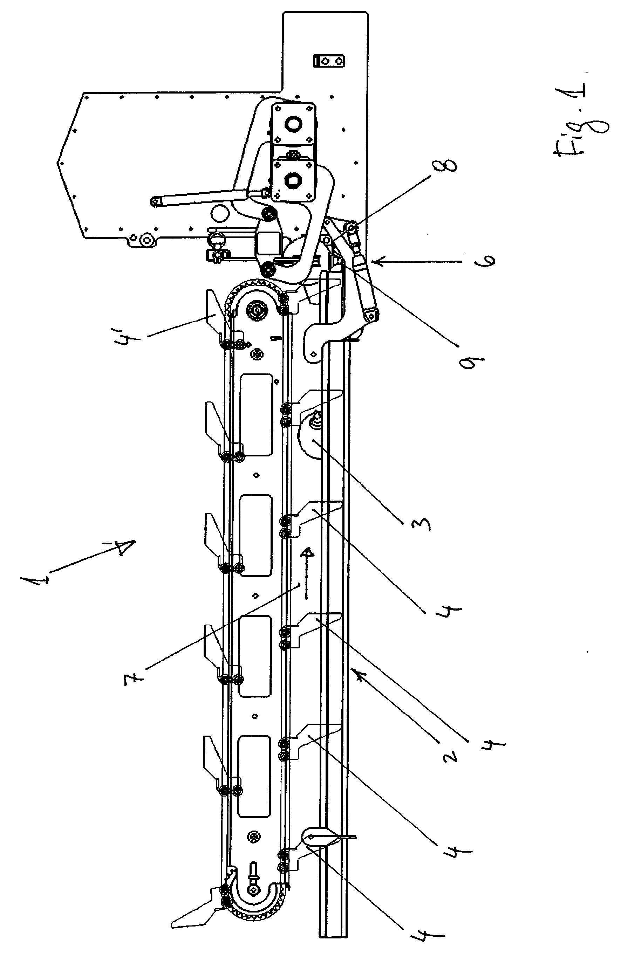

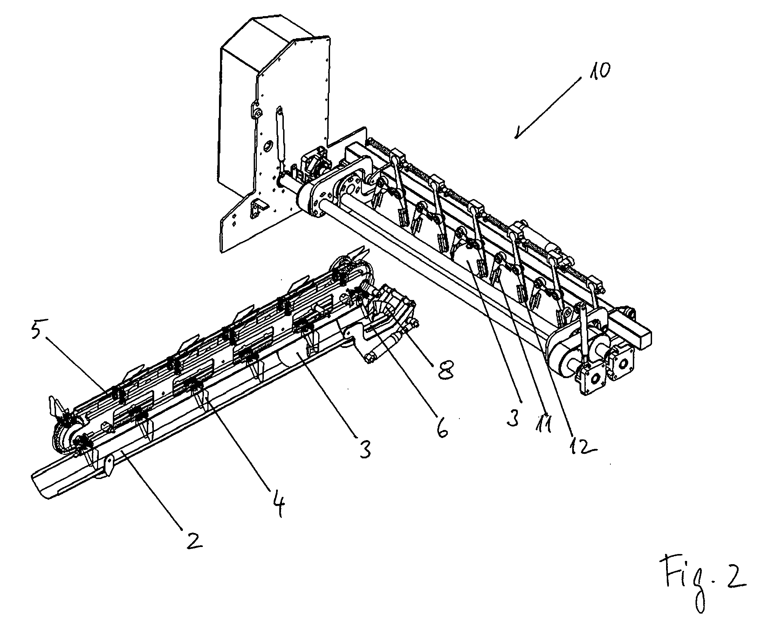

In figure 1, a side view of an embodiment of the invention is illustrated. The turning arrangement 1 comprises a channel 2 which in this illustration illustrates half a channel such that it possible to see through the channel 2. The channel has general V- or U-shape such that the objects 3 in this example, onions, will engage the side of the channel 2 whereby friction is created between the onion 3 and the channel 2. Above and super post the channel in the longitudinal direction is arranged a number of pins 4 which in this embodiment project into the opening of the channel itself. The pins are mounted on a chain 5 in such a way that the pins may pivot but the pins are otherwise biased in the traveling direction indicated by the arrow 7 such that the pins 4 may push the onions 3 towards the delivery end 6 of the channel 2. As the resistance towards further movement of the onions 3 arises due to the engagement of the onions with the delivery section 6, the pins 4 will pivot as illustrated with reference to the pin 4' such that the fold and pass over the onion and allow the following pin to push its onion into the roll of onions waiting to be removed from the delivery section 6 of the turning arrangement 1. In the delivery section 6 of the channel, a plate 8 is arranged which in this embodiment has the shape of a conical frustum which is provided with an aperture substantially central in said frustum. The opening in the conical frustum allows the stock 9 of the onion to project through the opening such that the onion is firmly placed inside the plate 8 and in a particularly well-defined orientation such that the further processing steps may carried out very accurately with relation to the onion. Superposed the plate 8, there are gripping means which will be explained further with respect to figure 2.

Turning to figure 2, the turning arrangement 1 may be seeing in a perspective view from which it is evident that the channel 2 has a U- or V-shaped cross section being inverted such that the open end of the channel is facing upwards. Inside the channel and superposed with the channel, a device carrying the pins 4 on a chain 5 such that the pins continuously will move towards the delivery end 6 of the channel 2. In the delivery end 6 of the channel 2, a plate is provided which plate will receive the objects to be transported and turned in the channel 2. As an object is correctly placed in the plate member 8, the gripping arrangement 10 will, by means of gripping arms 11, 12, grip and remove the object from the plate 8 and thereby make room for the following objects in the plate 8. In the illustration, an object 3 is gripped by the gripping means and already moved out of engagement with the plate member 8 making room for a further objects placed in the delivery section 6 of the channel.

In the illustrated embodiment, eight sets of cooperating gripping arms 11, 12 are illustrated which would correspond to eight channels 2 being arranged in a parallel arrangement such that eight onions at the time may be placed in the plates and at the same time removed by the gripping arm for further processing.

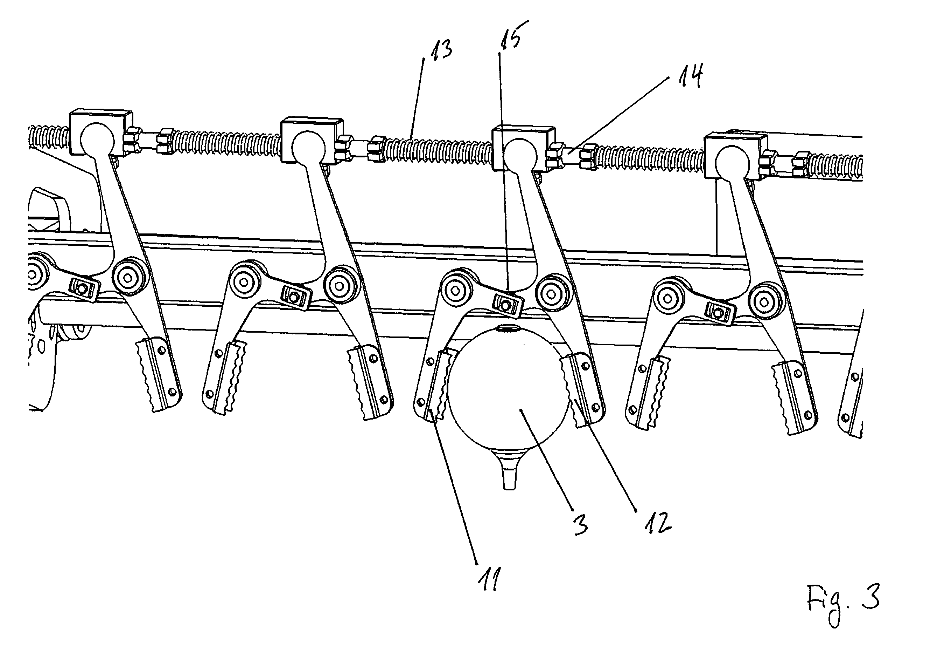

Turning to figure 3, a close-up of a gripping arrangement is illustrated. It should be mentioned that any type of means for gripping and removing the objects from the plates 8 may be applied within the present invention, but the particular illustrated embodiment in figure is suitable for picking onions 3. The gripping means comprises two arms 11, 12 which are pivotally arranged on a common member. The gripping arm 12 is biased by means of spring 13 such that when the gripping means are being prepared for gripping the objects 3, the axle 14 is moved towards the left in figure 3 thereby compressing the spring 13 and at the same time opening the gap between the arms 11, 12. As the axle 14 is released, the spring 13 will urge the arm 12 into engagement with the object 3, in this instance an onion, and at the same time due to pivotal connection 15 between the two gripping arms 11, 12 also at the same time move the gripping arm 11 into a corresponding grip with the object 3. In this manner, the gripping means are adaptable to different sizes of objects in that the compression of the spring member 13 regulates how hard and how far the gripping arms 11, 12 are bought towards each other.

As there is no personnel involved in the orientation of non-round objects and furthermore that the apparatus may be supplied with more turning arrangements, the turning speed of the non-round objects is not limited by the personnel but is alone limited by the speed. Hereby, the overall productivity of the production line may be increased, and the bottleneck has been removed from the orientation station to somewhere else in the production process. The turning of non-round objects is desirable in relation to further processing such as peeling, cutting, packaging and the like. The orientation of the object is not to important as long as it is well defined and exactly the same for each object.

## Claims

1. Apparatus suitable for orienting non-round objects, and in particular bulbs, berries, fruits, vegetables such as onions, beets and the like, where said apparatus comprises:
- a turning arrangement where the turning arrangement comprises a canal having a substantial inverted U- or V-shaped configuration, having the open side facing generally upwards, where said canal has an object receiving end and an object delivery end, and that superposed above and along in the same longitudinal direction one or more moveable pins are arranged, where said pins projects downwardly towards the open side of the canal, such that objects loaded onto the canal, will be pushed along the canal by the pins to the delivery end, at which end a plate in the shape of a conical frustrum is arranged for receiving the object.

2. Apparatus according to claim 1 wherein the pins are arranged such that they reciprocally moves back and forth along the canal where said pins are biased in the travelling direction and may pivot relative to the canal, such that the pins may fold and pass an object in the canal or at the delivery end, against the biasing force.

3. Apparatus according to claim 1 wherein a plurality of pins are arranged on a chain, which chain rotates around two end pulleys arranged adjacent and superposed above either end of the canal such that the pins are moved from the receiving end to the delivery end of the canal, where said pins are biased in the travelling direction and may pivot relative to the chain and canal, such that the pins may fold and pass an object in the canal or at the delivery end, against the biasing force.

4. Apparatus according to any preceding claim wherein gripping means are arranged adjacent the delivery end of the canal, where said gripping means has means for lifting an object from the plate onto further processing of the object.

5. Apparatus according to claim 1, 2 or 3 wherein the plate is provided with a central aperture, and that the outer edge of the plate is integral with the bottom of the canal.

6. Apparatus according to any preceding claim wherein the canal is sloped in the interval -25° to +25° more preferred -10° to +10°, and that the means for creating the slope of the canal may be adjustable according to the type of object being turned.

7. Apparatus according to any preceding claim where the apparatus comprises a plurality of parallel arranged turning arrangements.

8. Apparatus according to claim 1, wherein one or more obstructions are arranged for engagement with objects in the canal, where said one or more obstructions are arranged at an oblique angle relative to the longitudinal axis of the canal.

9. Method for turning non-round objects and in particular bulbs, berries, fruits, vegetables such as onions, beets and the like, wherein the objects are guided into an apparatus comprising a turning apparatus, where the turning apparatus comprises a canal having an inverted V- or U-shape, such that the objects are placed inside the canal, and that means are arranged superposed and above the canal, for pushing the objects along the canal towards a delivery end, where said delivery end comprises a plate, such that as the objects are pushed along the canal, the objects non-round shape will interact with the inner sides of the canal and the means for pushing the objects along the canal, whereby the objects will be uniformly orientated, and that as the objects are pushed onto the plate the objects will have a well defined and precise position.

10. Method according to claim 8 wherein the objects are onions, and that the movement along the canal will cause the onions to have their top facing forwards and downwards in the direction of travel through the canal, and that the plate is provided with a central aperture, such that as the onion is placed in the plate, the top of the onion will project into the aperture, thereby fixing the position of the onion.

11. Method according to claim 8 or 9 wherein the objects are distributed to one or more turning apparatuses by means of a hopper, and that means for removing the turned objects places the objects in preformed trays, for example arranged on a conveyor for moving the turned objects away from the turning apparatus.
